Europäisches Patentamt

European Patent Office

Office européen des brevets

(11) Veröffentlichungsnummer : **0 021 425**
**B1**

(19)

# EUROPÄISCHE PATENTSCHRIFT

(12)

(45) Veröffentlichungstag der Patentschrift :
26.01.83

(51) Int. Cl.³ : **H 04 M 11/04, G 08 B 25/02**

(21) Anmeldenummer : **80103605.4**

(22) Anmeldetag : **25.06.80**

(54) **Verfahren und Vorrichtungen zur Meldung von Notrufen und Einleitung von Nothilfemassnahmen.**

(30) Priorität : **27.06.79 NL 7905018**

(43) Veröffentlichungstag der Anmeldung :
**07.01.81 Patentblatt 81/01**

(45) Bekanntmachung des Hinweises auf die Patenterteilung : **26.01.83 Patentblatt 83/04**

(84) Benannte Vertragsstaaten :
**AT BE CH DE FR GB IT LI SE**

(56) Entgegenhaltungen :
**FR A 2 319 258**
**NL A 7 709 333**
**US A 4 064 368**

(73) Patentinhaber : **SIEMENS AKTIENGESELLSCHAFT**
**Berlin und München Wittelsbacherplatz 2**
**D-8000 München 2 (DE)**

(72) Erfinder : **Stenhuis, Derk**
**Martin Campslaan 12**
**NL-2286 TJ Rijswijk (NL)**
Erfinder : **Nieuwenhuizen, Wouter Johannes**
**Dipl.-Ing.**
**Esmoreitschouw 51**
**NL-2726 KJ Zoetermeer (NL)**

# Verfahren und Vorrichtungen zur Meldung von Notrufen und Einleitung von Nothilfemaßnahmen

Die Erfindung bezieht sich auf ein Verfahren zur Meldung von Notrufen und Einleitung von Nothilfemaßnahmen mittels gesicherter, verschlüsselter Datenübertragung zwischen einer oder mehreren empfangsberechtigten Alarmzentralen und mindestens einer Meldestelle über ein Kommunikationsnetz, wobei die in einer abgeschlossenen Wohneinheit installierte Meldestelle eine ihr zugeordnete Notrufmeldeeinrichtung und eine Nothilfekommunikationseinheit aufweist und aufgrund einer Notrufmeldung selbsttätig eine Verbindung zur Alarmzentrale herstellt und hierbei durch vorherige gegenseitige Identifizierung sicherstellt, daß der Notruf und weitere Informationen nur an die empfangsberechtige Alarmzentrale übertragen werden und wobei nach dem Eintreffen einer Notrufmeldung in einer berechtigten Alarmzentrale eine Wechselsprechverbindung zwischen der Alarmzentrale und der Meldestelle hergestellt wird, die von der Alarmzentrale aus gesteuert wird.

Alte alleinstehende und/oder körperbehinderte Personen, die in einer abgeschlossenen Wohneinheit leben, haben oft Angst, daß niemand bemerkt, wenn sie Hilfe brauchen und sie nicht mehr in der Lage sind, ihr Telefon zu bedienen. Zu diesem Zweck sind Nothilfe-Kommunikationssysteme geschaffen worden. Mit nur einem Knopfdruck kann automatisch eine Verbindung zu einer entsprechenden Zentralstation hergestellt und Hilfe angefordert werden.

Solche Nothilfe-Kommunikationssysteme sind im allgemeinen bekannt. Diese benützen zur Datenübertragung haüfig das öffentliche Fernsprechnetz. Dabei soll zum Schutz des Privatbereiches sichergestellt werden, daß ein Hilferuf nur zu einer berechtigten Zentralstation gelangt und eine Verbindung nur zwischen der berechtigten Zentrale und der entsprechenden Teilnehmerstelle zustande kommt.

In der NL-OS 77 09 333 wird ein Kommunikationssystem beschrieben, in dem in Notlagen eine Verbindung mit einer Zentrale hergestellt werden kann. Dabei wird aufgrund einer Notrufmeldung eine Verbindung von einer Meldestelle an eine zugeordnete Zentrale hergestellt und eine Wechselsprechverbindung über einen Lautsprecher der Meldestelle geschaltet.

Aus der US-PS 40 64 368 ist ebenfalls ein Nothilfekommunikationssystem bekannt, das über das öffentliche Fernsprechnetz eine Verbindung zu einer Zentrale herstellt, von der aus Hilfe herbeigeholt werden kann. Die FR-OS 23 19 258 beschreibt ein Fernüberwachungssystem mit Hilfe eines öffentlichen Telefonnetzes für kranke oder behinderte Personen.

Mit diesen und anderen bekannten Systemen kann Hilfe herbeigerufen werden und eine zur Hilfeleistung geeignete Person zur Wohnung der in Not geratenen Person geschickt werden. Ist diese Person aber aus irgendwelchen Gründen nicht in der Lage, die Wohnungstür selbst zu öffnen, so kann die Hilfsperson nicht ohne weiteres in die abgeschlossene Wohnung gelangen.

Aufgabe der Erfindung ist es, ein Verfahren anzugeben, mit dem es möglich ist, den Zugang zu einer abgeschlossenen Wohnung, in der sich eine in Not geratene Person befindet, zu ermöglichen. Dabei soll der Zutritt zu der abgeschlossenen Wohneinheit von der Zentrale aus, bei der die Notrufmeldung registriert wurde, kontrolliert und ermöglicht werden.

Diese Aufgabe wird erfindungsgemäß durch folgende Verfahrensschritte gelöst :

a) von der Alarmzentrale aus wird eine kontrollierte Türöffnungsprozedur eingeleitet, wobei zur Meldestelle ein codiertes Signal zur Aktivierung eines Türöffnungsschaltkreises übertragen und nach Beendigung des Sprechverkehrs die Verbindung getrennt wird.

b) nach Betätigung eines Türklingelknopfes der abgeschlossenen Wohneinheit wird vom aktivierten Türöffnungsschaltkreis erneut eine Verbindung von der Meldestelle zur Alarmzentrale hergestellt und dies dort angezeigt ;

c) von der Alarmzentrale aus wird mittels einer an der Tür der abgeschlossenen Wohneinheit angeordnete Türübertragungseinrichtung eine Zugangsberechtigung einer zu Hilfe kommenden Person kontrolliert ;

d) nach Berechtigungsfeststellung wird von der Alarmzentrale aus das Öffnen der Tür durch ein weiteres codiertes Signal veranlaßt und danach der Türöffnungsschaltkreis abgeschaltet und nach Beendigung eines eventuell weiteren Sprechverkehrs die Verbindung getrennt ;

e) mit einem Rücksetzungssignal wird von der Meldestelle eine letzte Verbindung zur Alarmzentrale hergestellt, codierte Abschlußdaten übertragen und die Nothilfekommunikations-Prozedur beendet.

Mit diesem Verfahren soll sichergestellt sein, daß nur auf Initiative derjenigen Person, die sich in der abgeschlossenen Wohneinheit befindet und um Hilfe gerufen hat, die Hilfeleistung erfolgt und nur die berechtigte Person, nachdem von der Zentrale aus die Berechtigung überprüft worden ist, Zugang zur Wohnung erlangt. Hiermit soll der Schutz des persönlichen Lebensbereiches sichergestellt sein.

In vorteilhafter Weise kann nach einer Notrufmeldung in der Meldestelle ein Voralarm als Quittungssignal ausgesandt werden. Zweckmäßigerweise wird man ein akustisches Quittungssignal über einen Lautsprecher, der der Kommunikationseinheit zugeordnet ist, aussenden. Ebenso kann vorgesehen sein, nachdem die Alarmzentrale mit der um Hilfe suchenden Person gesprochen hat, ein weiteres Signal zur Beruhigung der betreffenden Person von der Meldestelle auszusenden, bis die angeforderte oder zugesagte Hilfsperson, z.B. ein Notarzt, eintrifft. Die Hilfsperson kann dann das Beruhigungssignal abstellen und das Kommunikationssystem in den Ruhezustand zurückstellen und damit die Kommunikationsprozedur beenden. Ebenso kann vorgesehen sein, daß die Person, die eine Notrufmeldung eingeleitet hat, jederzeit den Verbindungsaufbau zur Zentrale oder die Türöffnungsprozedur unterbricht und das Kommunikationssystem zurückstellt.

Es kann jedoch wünschenswert oder notwendig sein, daß eine abgeschlossene Wohneinheit einer alleinstehenden Person in gewissen Zeitabständen von einer berechtigten Alarmzentrale aus angerufen wird, und daß ohne eigene Initiative der Person in der Wohneinheit die Meldestelle in Betrieb gesetzt wird, so daß von der Alarmzentrale aus eine Wechselsprechverbindung mit dieser Wohneinheit hergestellt wird, selbst wenn die betreffende Person nicht in der Lage ist, eine solche Verbindung selbständig herzustellen. Zu diesem Zweck ist in einer Weiterbildung der Erfindung in der Meldestelle der abgeschlossenen Wohneinheit eine Umschalteinheit mit einem Umschalter vorgesehen. Damit kann von einer aktiven Betriebsart, bei der die um Hilfe rufende Person eine Notrufmeldung selbsttätig auslöst, auf eine passive Betriebsart umgeschaltet werden. Damit wird erreicht, daß von einer berechtigten Alarmzentrale aus, ohne weiteres Zutun der Person in der entsprechenden Wohnung, eine Verbindung mit der Meldestelle hergestellt und eine Wechselsprechverbindung geschaltet werden kann. Bei dieser Betriebsart ist es ebenso möglich, eine Alarmprozedur von der Meldestelle aus zu veranlassen.

Zweckmäßigerweise können neben der obengenannten Notrufkommunikations weitere Meldeeingänge in der Meldestelle vorgesehen sein. An diese können Meldungsgeber, z.B. für Brand, Einbruch, Überfall, Störung eines elektrischen Gerätes, Lebensüberwachung der betreffenden Person, angeschlossen werden. Diese können von der Zentrale aus auf ihren Meldezustand hin abgefragt und dieser angezeigt werden. Selbstverständlich kann auch von dem Gefahrenmelder der Meldestelle bei einer aktiven Betriebsart der Meldestelle selbsttätig bei Ansprechen eines Gefahrenmelders unverzüglich eine Verbindung zur entsprechenden Alarmzentrale hergestellt und dort entsprechende Alarmzustände angezeigt werden.

Weitere Ausgestaltungsmöglichkeiten der Erfindung sind in den Unteransprüchen angegeben.

Die Erfindung wird im folgenden anhand der Zeichnung näher erläutert.

Es zeigen

Figur 1 ein Blockschaltbild des prinzipiellen Aufbaues eines Nothilfe-Kommunikationssystems,

Figur 2 ein Blockschaltbild der in einer abgeschlossenen Wohneinheit vorgesehenen Meldestelle,

Figur 3 ein Blockschaltbild eines abgewandelten Ausführungsbeispiels mit weiteren Details und

Figur 4 den zeitlichen Ablauf zur Erläuterung der einzelnen Verfahrensschritte.

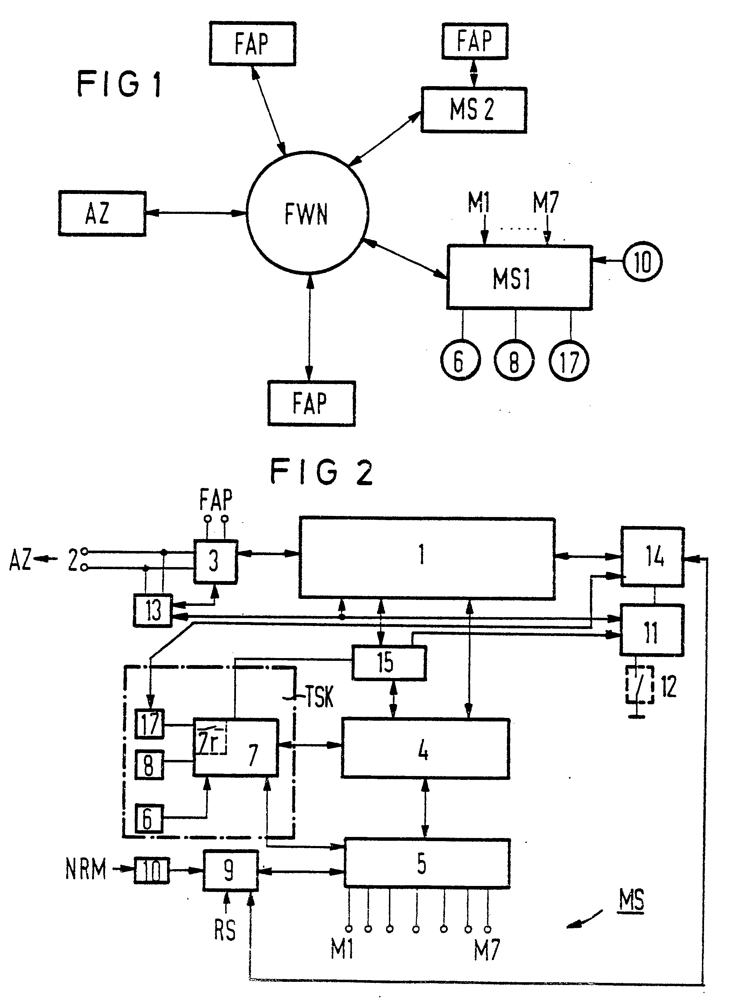

Der in Fig. 1 dargestellte prinzipielle Aufbau des Nothilfe-Kommunikationssystems besteht aus einer Alarmzentrale AZ, einer Meldestelle MS, von denen zwei, MS1 und MS2, dargestellt sind. Diese sind jeweils als Zusatzeinrichtung zum privaten Fernsprechapparat FAP installiert. Die Verbindung zwischen den beiden Endstellen des Systems ist jeweils das öffentliche Fernsprechwählnetz FWN. Die zur Meldestelle MS gehörenden Elemente, die nachfolgend noch genauer erläutert werden, sind eine Notrufmeldungsschaltvorrichtung 10, z.B. ein Infrarotempfänger, zusätzliche Meldeeingänge M1 ... M7 für Gefahrenmelder, ein Türklingelknopf 6, eine Türübertragungseinrichtung 17 für die Zugangskontrolle, z.B. ein Türlautsprecher für eine Wechselsprechverbindung, und ein Türöffner 8.

Die in Fig. 2 dargestellte Meldestelle MS weist einen Fernsprechapparat FAP, eine Fernsprechleitung 2 und eine Leitungsankopplung 3, einen Kommunikationsprozessor 1 und eine Kommunikationseinheit 14 auf. Dieser ist direkt und über mehrere Schaltglieder, die später noch beschrieben werden, eine Lautsprechereinheit 9 mit einem Infrarotempfänger 10 zugeordnet. Der Kommunikationsprozessor 1 ist so programmiert, daß aufgrund einer Notrufmeldung NRM die Meldestelle MS aktiviert und mit der ersten von mehreren eingespeicherten Rufnummern die Verbindung zur empfangsberechtigten Alarmzentral AZ selbsttätig hergestellt wird. Dieser Verbindungsaufbau erfolgt über die Leitungsankopplung 3, die den Fernsprechapparat FAP von der Fernsprechleitung 2 trennt, über die Fernsprechleitung 2 und dem öffentlichen Fernsprechwählnetz FWN zur Alarmzentrale AZ. Ist die Verbindung aufgebaut, so findet ein bidirektionaler Datenfluß zwischen der Meldestelle MS und der Alarmzentral AZ statt. Die Informationen werden im Sprachband durch Frequenzumtastung (frequence shift keying) digital übertragen. Durch gegenseitige Identifizierung von der Meldestelle und der Alarmzentrale wird sichergestellt, daß die Informationen nur zwischen einer empfangsberechtigten Alarmzentrale und der entsprechenden Meldestelle übertragen werden. Dazu ist in der Meldestelle MS dem Kommunikationsprozessor 1 eine Entschlüsselungsvorrichtung 15 zugeordnet. Diese wiederum ist mit einer Türsteuervorrichtung 7 und mit einer Ein- und Ausgabeeinheit 4 verbunden. Diese Ein-/Ausgabeeinheit 4 ist mit dem Kommunikationsprozessor 1 und mit einer Kopplungseinheit 5 verbunden. Diese weist mehrere Eingänge M1 bis M7, z.B. für sieben Melder, auf. Zudem ist die Kopplungseinheit 5 mit der Türsteuervorrichtung 7 verbunden.

Es wird angenommen, ein Notruf wird über einen kleinen mobilen Sender ausgelöst. Dazu ist beispielsweise ein Infrarotsender vorgesehen, der am Armgelenk wie eine Armbanduhr getragen werden kann und einen Druckknopftaster und Infrarotleuchtdioden aufweist. Die Meldestelle MS weist der Kommunikationseinheit 14 zugeordnete ein oder mehrere Lautsprechereinheiten 9

mit jeweils einem Infrarotempfänger 10 auf. Die Lautsprechereinheit 9 ist über die Kopplungseinheit 5, der Ein-/Ausgabeeinheit 4 und dem Kommunikationsprozessor 1 der Notrufkommunikationseinheit 14 zugeordnet. Der Infrarotempfänger 10 wertet das in codierter Form ausgesendete Infrarotsignal aus. Dieses Notrufmeldesignal NRM wird von der Meldestelle MS zur Alarmzentrale AZ übertragen.

Ist die Verbindung zur Alarmzentrale AZ hergestellt, und eine Notrufmeldung NRM zur Alarmzentrale AZ übertragen und angezeigt worden, so wird von der Alarmzentrale AZ aus durch das Bedienungspersonal ein codiertes Signal zur Meldestelle MS gesendet, das die Nothilfekommunikationseinheit 14 für einen Wechselsprechverkehr frei schaltet. Der Sprechverkehr erfolgt über die Lautsprechereinheit 9, über die mittels des Infrarotempfängers 10 die Notrufmeldung MRN erfolgte, d.h. nur diese Lautsprechereinheit 9 wird angeschaltet. Der Sprechverkehr wird von der Alarmzentrale AZ aus gesteuert. Erkennt oder erfährt die Bedienungsperson der Alarmzentrale AZ, daß die um Hilfe suchende Person eine Hilfsperson, z.B. einen Notarzt, benötigt, die zur Hilfeleistung in die Wohnung können muß, so wird von der Alarmzentrale AZ aus, während des Wechselsprechverkehrs mit einem weiteren codierten Signal, einem Türklingelfreigabesignal TKF, die Türöffnungsprozedur eingeleitet. Das heißt, das Signal wird von der Entschlüsselungsvorrichtung 15 entschlüsselt und einem Türöffnungsschaltkreis TSK zugeführt. Dieser ist an die Entschlüsselungsvorrichtung 15 und an die Ein-/Ausgabeeinheit 4 angeschlossen, die wiederum mit dem Kommunikationsprozessor 1 verbunden ist. Mit diesem Signal (TKF) wird der Türöffnungsschaltkreis TSK aktiviert; ein Klingelknopf 6 an der Wohnungstür wird dabei derart an die Türsteuervorrichtung 7 geschaltet, daß ein Betätigen des Klingelknopfes 6 das Auslösen der Türöffnungsprozedur bewirkt. Nach Beendigung des Sprechverkehrs wird die Verbindung von der Alarmzentrale AZ aus zur Meldestelle MS getrennt.

Gemäß der Erfindung ist es nun möglich, in einer solchen Lage von der Alarmzentrale aus die Zugangstür zur Wohnung zu öffnen, wenn in der Alarmzentrale festgestellt worden ist, daß derjenige, der die Hilfe leisten soll, sich tatsächlich vor der Zugangstür der betreffenden Wohneinheit befindet. Die Alarmzentrale muß nun in der Lage sein, festzustellen, ob die hilfeleistende Person an der Zugangstür der betreffenden Wohneinheit angekommen ist.

Ist die Hilfsperson an der betreffenden Wohnungstür angelangt, und betätigt den Klingelknopf 6, so wird von der Meldestelle MS aus selbsttätig erneut eine Verbindung zur Alarmzentrale AZ hergestellt. Dort wird nun angezeigt, daß an der betreffenden Wohnungseinheit geklingelt worden ist. Um nun sicherzustellen, daß nur einer berechtigten Person Zugang zur Wohneinheit gewährt wird, wird von der Alarmzentrale die Zugangsberechtigung kontrolliert. Mit der Verbindungsherstellung von der Meldestelle zur Alarmzentrale wird über die Türsteuervorrichtung 7 und einem Umschaltrelais 7r eine zusätzliche Wechselsprechverbindung zwischen einem an der Wohnungstür angeordneten Türlautsprecher 17 und der Kommunikationseinheit 14 hergestellt. Dadurch ist eine Sprechverbindung zwischen demjenigen, der vor der Zugangstür der Wohnung steht, und der Alarmzentrale möglich. Wenn aus diesem Gespräch in der Alarmzentrale festgestellt worden ist, daß die Hilfsperson tatsächlich vor der Zugangstür steht, wird von der Alarmzentrale AZ aus ein weiteres codiertes Türöffnungssignal TO an die betreffende Wohneinheit gesendet. Dieses Signal wird über den Kommunikationsprozessor 1, die Entschlüsselungsvorrichtung 15 und die Türsteuervorrichtung 7 einem Türöffner 8 zugeführt, wodurch die Zugangstür geöffnet wird und die Hilfsperson die Wohneinheit betreten kann.

In der Meldestelle sind weitere Maßnahmen vorgesehen, durch die vorzugsweise akustische Signale erzeugt werden können. Nach Auslösung einer Notrufmeldung NRM wird über den der Kommunikationseinheit 14 zugeordneten Lautsprecher 9 für eine bestimmte Zeit ein Voralarm VA als Quittungssignal, z.B. ein Dauerton, ausgesendet. In dieser Zeit ist es möglich, die Meldestelle in die Ausgangsposition zurückzusetzen, bevor eine Notrufmeldung an die Alarmzentrale gelangt. Zur Beruhigung der um Hilfe suchenden Person wird sobald eine Verbindung mit der Zentrale zustande gekommen ist, ein weiteres, vorzugsweise akustisches Signal als Beruhigungssignal BS ausgesendet, bis es manuell in der Wohneinheit zurückgestellt wird. Zur Unterscheidung vom Voralarm VA wird das Beruhigungssignal BS als rhytmisch unterbrochenes Tonsignal abgestrahlt. Nach Eintreffen der Hilfsperson wird durch ein Rücksetzsignal RS, das z.B. mit einem Taster an der Lautsprechereinheit 9 an die Notrufkommunikationseinheit 14 gegeben wird, das Beruhigungssignal BS abgeschaltet und die Nothilfekommunikationsprozedur beendet.

Es können sich jedoch Situationen ergeben, in denen es wünschenswert oder notwendig ist, daß eine alleinstehende oder behinderte Person in einer Wohneinheit vorübergehend, in gewissen Zeitabständen, z.B. mehrere Male am Tag, von einer berechtigten Alarmzentrale AZ aus angerufen wird, um beispielsweise den Gesundheitszustand der betreffenden Person festzustellen. Erfindungsgemäß weist deshalb die Meldestelle MS eine Umschalteinheit 11 mit einem zugeordneten Umschalter 12 auf. Normalerweise ist die Meldestelle auf eine aktive Betriebsart geschaltet, die als « privacy » bezeichnet wird. Mit dem Umschalter 12 kann von dieser aktiven Betriebsart auf eine passive Betriebsart umgeschaltet werden, die mit « intensive care » bezeichnet wird. Zweckmäßigerweise ist ein schlüsselbetätigter Umschalter 12 vorgesehen, der von einer autorisierten Person, z.B. einer Pflege- oder Sozialperson oder vom Bewohner selbst, betätigt wird. Nur bei dieser Betriebsart ist es möglich, von der Zentrale AZ aus eine Verbindung zur Meldestelle MS herzustellen und eine Wechselsprechverbindung aufzubauen. Dazu weist die Meldestelle MS einen Ruftondetektor 13 auf, der parallel an die Fernsprechleitung 2 angeschlossen ist und mit der Leitungsankopplung 3, dem Kommunikationsprozessor 1 und der Umschalteinheit 11 verbunden ist. Die Umschalteeinheit 11 ist mit der Kommunikationseinheit 14 und der Entschlüsselungsvorrichtung 15 verbunden. Wird von der Alarmzentrale AZ aus die Meldestelle MS angerufen, so wird dort das empfangene Rufsignal (Klingelsignal) des Fernsprechapparates FAP über den Ruftondetektor 13 nach Empfang einer vorbestimmten Anzahl von Rufsignalen, z.B. 7, ein Ausgangssignal, z.B. mit dem 8. Rufsignal, erzeugt, das bewirkt, daß der Kommunikationsprozessor 1 über die Leitungsankopplung 3 an die Fernsprechleitung 2 angeschaltet wird. Damit wird die Nothilfe-Kommunikationseinheit 14 angeschaltet und nach gegenseitiger Identifikation eine Wechselsprechverbindung zwischen der Alarmzentrale und der Meldestelle ermöglicht. Zum Schutz des Privatbereiches ist bei der Betriebsart « intensive care » die Türöffnungsprozedur nicht vorgesehen. Bei dieser passiven Betriebsart kann aber ein in der Wohneinheit ausgelöster Notrufalarm sofort auf die aktive Betriebsart umschalten und wie oben beschrieben, an die Alarmzentrale übertragen werden.

Die an die Kopplungseinheit 5 anschließbaren Melder (M1 ... M7) können Gefahren melden, wie z.B. Brand, Einbruch, Lebenszeichen usw. Der Kommunikationsprozessor 1 kann so programmiert sein, daß beim Ansprechen eines der Gefahrenmelder M1 bis M7 eine selbsttätige Verbindung unverzüglich, d.h. ohne den oben erwähnten Voralarm VA, von der Meldestelle MS zur Zentrale AZ augebaut und dort die entsprechende Meldung angezeigt wird, um weitere Maßnahmen zu veranlassen.

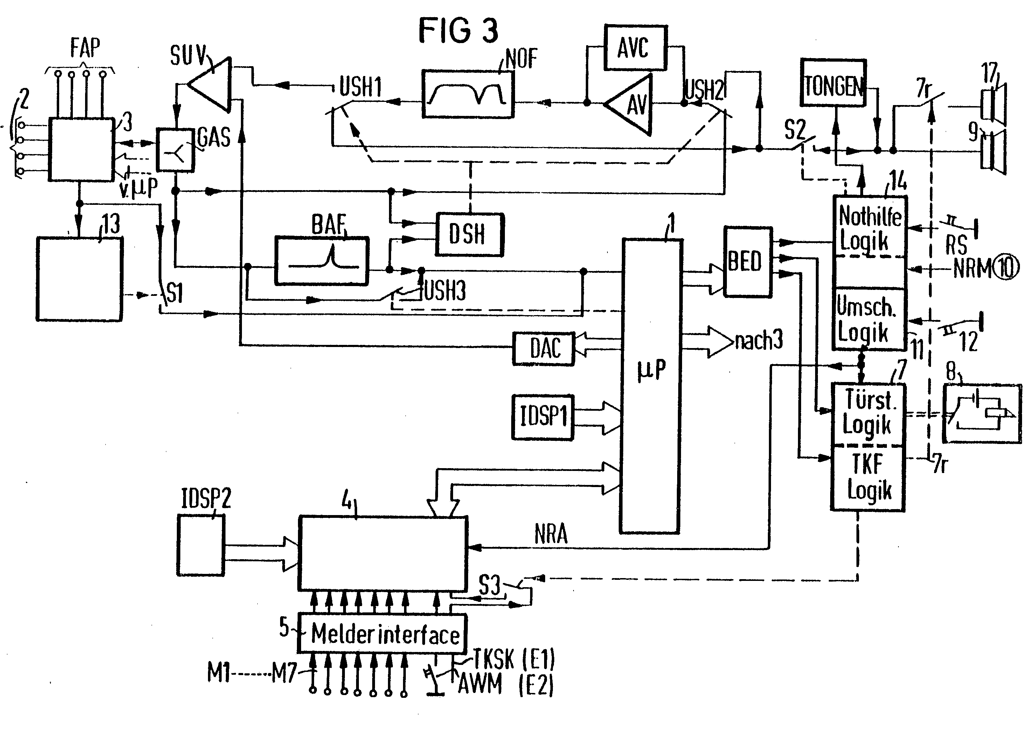

In der Fig. 3 ist die Meldestelle MS ähnlich aufgebaut wie in Fig 2. Die Leitungsankopplung 3 ist mit einer Gabelschaltung GAS verbunden. Während des Wechselsprechverkehres wird von der Alarmzentrale aus auf Sprechen oder Hören umgeschaltet. Mit dieser Umschaltung wird jedesmal in der Meldestelle ein kurzes hörbares Signal erzeugt, damit die Person in der Wohnung weiß, wann die Umschaltung erfolgt ist. Für das Umschalten weist die Meldestelle MS einen Detektor DSH für das Umschaltsignal, z.B. 1 800 Hz-Signal auf, der die Umschalter für Sprechen/Hören USH1 und USH2 ansteuert. Der Sprechweg, von der Meldestelle aus gesehen, verläuft vom Lautsprecher der Lautsprechereinheit 9 über einen Schalter S1, der von der Nothilfekommunikationslogik 14 gesteuert wird, dem Umschalter USH2, einem Audioverstärker AV mit automatischer Lautstärkenregelung AVC, einem Notch-Filter NOF (1 800 Hz), dem Umschalter USH1, einem Summenverstärker SUV zur Gabelschaltung GAS. Von da aus führt die Übertragung über die Leitungsankopplung 3 und dem öffentlichen Fernsprechwählnetz FWZ zur Alarmzentrale AZ. Der Hören-Weg verläuft von der Gabelschaltung GAS über USH2, den Audioverstärker AV, dem Notch-Filter NOF, USH1 und dem Schalter S2 zum Lautsprecher 9. Werden während des Sprechverkehrs zusätzliche Daten von der Meldestelle zur Alarmzentrale übertragen, so werden diese über einen Digitalanalogkonverter DAC dem zweiten Eingang des Summenverstärkers SUV zugeführt. Umgekehrt werden Daten von der Alarmzentrale über die Gabelschaltung GAS entweder über das Bandfilter BAF oder unter Umgehung des Bandfilters BAF durch Einschalten des Schalters USH3 zum Kommunikationsprozessor 1 übertragen. Von diesem werden sie dann weiterverarbeitet.

Der Kommunikationsprozessor 1 kann aus einem oder mehreren Mikroprozessoren bestehen, in die das Betriebs- und Steuerprogramm eingespeichert ist. Ferner ist die Entschlüsselungsvorrichtung 15 aus Fig. 2 im Kommunikationsprozessor mit integriert. Die vom Kommunikationsprozessor ausgehenden Befehle werden von einem Befehlsdecoder BED decodiert und den entsprechenden Logikschaltungen zugeführt.

Die anzuwählenden Rufnummern und die Identifizierungsdaten der Meldestelle sind in zwei Identifizierungsspeichern ISP1 und ISP2 abgespeichert. Der erste Speicher ist direkt, der zweite über die Ausgabeeinheit 4 dem Kommunikationsprozessor 1 zugeordnet. Vom Kommunikationsprozessor 1 werden die betreffenden Steuer- und Befehlssignale zu den entsprechenden Kommunikations- und Schalteinheiten übertragen. Zur Erzeugung des Voralarms, des Beruhigungssignales und des Audiosignales beim Sprechen-/Hören-Umschalten ist ein Tongenerator TONGEN vorgesehen, der von der Nothilfelogik 14 an den Lautsprecher 9 angeschaltet wird.

Eine Notrufmeldung NRM gelangt über einen Infrarot-Empfänger (10) in die Nothilfelogik 14 und von da aus als notrufalarm NRA über die Ein-/Ausgabeeinheit 4 zum Kommunikationsprozessor 1 und von da zur Alarmzentrale. Ist von der Alarmzentrale AZ aus die Türöffnungsprozedur eingeleitet (TKF) worden, so wird dieser Befehl über den Kommunikationsprozessor 1 an die Türöffnungslogik 7 gegeben. Die darin enthaltene Logik für die Türklingelfreigabe (TKF), schaltet mit S3 einen Türklingelschaltkreis TKSK ein. In diesem ist der Türklingelknopf mit einbezogen. Der Eingang E1 für den Türklingelschaltkreis ist an der Kopplungseinheit 5 vorgesehen. Von hier aus ist der Türklingelschaltkreis über den Schalter S3 an die Kopplungseinheit 5 geführt. Ebenso wird von der Türklingelfreigabelogik (TKF Log.) das Einschalten des Schalters 7r für den Türlautsprecher 17 gesteuert. Von der Türöffnungslogik 7 wird nach Erhalt des entsprechenden Steuerbefehls aus dem Kommunikationsprozessor 1 der Türöffner 8 betätigt.

Ist die Meldestelle von der aktiven Betriebsart mittels des Umschalters 12 und der Umschaltlogik 11 auf die passive Betriebsart umgeschaltet, so ist die Linienankopplung 3 mit dem Ruftondetektor 13 verbunden. Dieser weist einen Zähler auf, der nach dem siebten Rufton den Schalter S1 einschaltet. Somit kann das Signal des achten Ruftons zum Kommunikationsprozessor 1 gelangen und das Einschalten der Nothilfekommunikation bzw. der Sprechverbindung veranlassen.

Die Kopplungseinheit 5, hier als Melderinterface bezeichnet, weist noch einen weiteren Eingang E2 auf. Dieser dient dazu, eine Abwesenheitsmeldung AWM (in Fig. 3 mit einem Schalter angegeben) an die Meldestelle MS zu geben. Beispielsweise kann im Schloß der Wohnungstür ein Schalter eingebaut sein, der beim Abschließen der Wohnungstür die Abwesenheitsmeldung AWM an die Meldestelle gibt. Damit wird bewirkt, daß diejenigen Melder, die die betreffende Person auf Lebenszeichen hin überwacht, während der Abwesenheit, wenn einer davon anspricht, keine Alarmgabe zur Zentrale zulassen. Es wird somit ein Verbindungsaufbau von der Meldestelle zur Alarmzentrale verhindert. Solche Überwachungsmelder auf Lebenszeichen können Melder sein, die ansprechen, wenn eine gewisse Zeit lang keine WC-Spülung oder kein elektrischer Schalter betätigt worden ist.

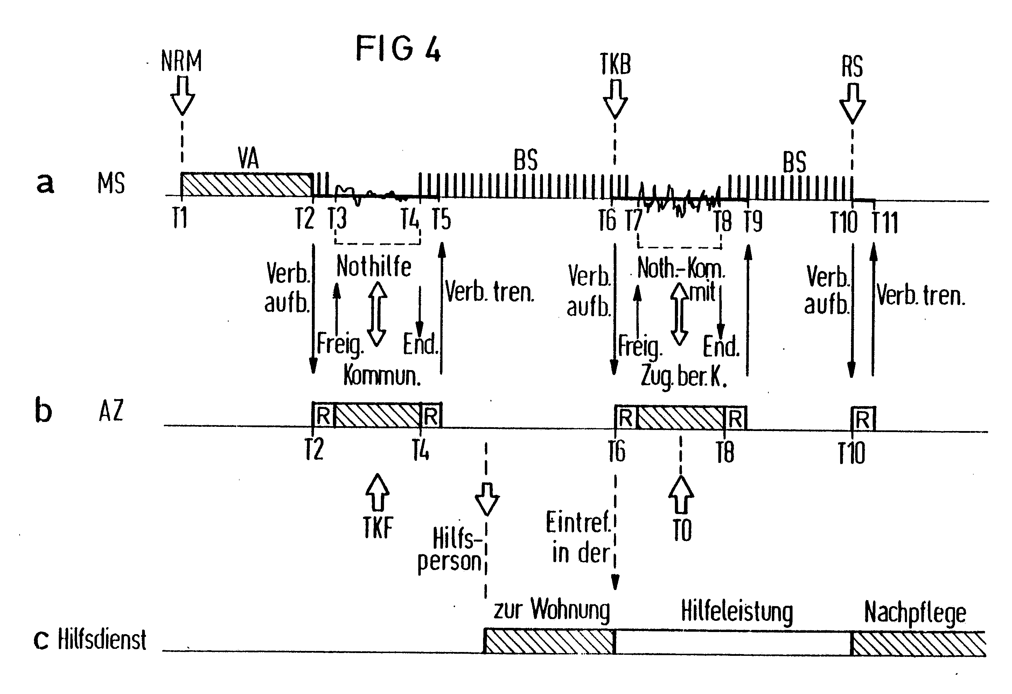

In der Fig. 4 ist der zeitliche Ablauf der einzelnen Verfahrensschritte dargestellt. Dabei ist der zeitliche Ablauf mit a in der Meldestelle, mit b in der Alarmzentrale und mit c für den Hilfsdienst dargestellt. Zum Zeitpunkt T1 wird eine Notrufmeldung NRM (Pfeil), wie oben erläutert, ausgelöst und ein Voralarm VA als Quittungssignal für eine bestimmte Zeit (z.B. 20 Sek.) über die Lautsprechereinheit 9 abgegeben. Zum Zeitpunkt T2 wird die Verbindung von der Meldestelle MS zur Alarmzentrale AZ aufgebaut, statt des Voralarms VA ein Beruhigungssignal BS gesendet, die wechselseitige Identifizierung vorgenommen und der Notruf zur Alarmzentrale übertragen und dort registriert (in Fig. 4b mit R bezeichnet). Dabei wird auch eine Meldeübersicht zur Alarmzentrale übertragen, d.h. die Melderzustände sämtlicher an die Kopplungseinheit 5 der Meldestelle angeschlossenen Melder, und in der Alarmzentrale registriert, angezeigt und protokolliert. Zum Zeitpunkt T3 wird die Nothilfekommunikation bzw. die Wechselsprechverbindung (Doppelpfeil) freigegeben, die bis zum Zeitpunkt T4 dauern mag und das Beruhigungssignal BS abgeschaltet. Während dieser Zeit kann von der Zentrale AZ aus die Türklingelfreigabe TKF (Pfeil) erfolgen. Nach Beendigung der Sprechverbindung zum Zeitpunkt T4 wird erneut eine Datenübergabe, wie Melderübersicht, Türklingelfreigabebestätigung, an die Alarmzentrale übergeben und dort registriert (R) und in der Meldestelle wieder das Beruhigungssignal BS über die Lautsprechereinheit 9 gesendet. Zum Zeitpunkt T5 wird die Verbindung zwischen der Alarmzentrale und der Meldestelle getrennt. Nach dem Zeitpunkt T5 wird die Hilfsperson zur Wohnung der um Hilfe suchenden Person eilen (in Fig. 4c schraffiert angedeutet). Zum Zeitpunkt T6 wird die an der Wohnungstür angelangte Hilfsperson an der Tür die Klingel betätigen (TKB ; Pfeil). Das bewirkt einen erneuten Verbindungsaufbau von der Meldestelle zur Zentrale mit dem bekannten Datenaustausch und dem Türklingelbetätigungssignal, welche in der Alarmzentrale registriert (R) werden. Nachdem während des Sprechverkehrs (Doppelpfeil) in der Zeit von T7 bis T8 die Berechtigungsfeststellung erfolgt ist, und von der Alarmzentrale aus das Türöffnungssignal TO (Pfeil) an die Meldestelle gegeben wurde, wird erneut zum Zeitpunkt T8 die Sprechverbindung beendet, das Beruhigungssignal BS in der Meldestelle angeschaltet, die Melderübergabe, ein Signal, das das Öffnen der Tür bestätigt, zur Alarmzentrale übertragen und registriert (R). Zum Zeitpunkt T8 wird die Verbindung von der Alarmzentrale zur Meldestelle getrennt. Über die Rücksetztaste RS (Pfeil) wird das Beruhigungssignal BS abgeschaltet, über eine weitere Verbindungsherstellung zur Zentrale das Rücksetzen und die Meldeübersicht übertragen und registriert. Danach folgt eine endgültige Trennung der Verbindung und ein Zurückstellen des Kommunikationssystems.

### Ansprüche

1. Verfahren zur Meldung von Notrufen und Einleitung von Nothilfemaßnahmen mittels gesicherter, verschlüsselter Datenübertragung zwischen einer oder mehreren empfangsberechtigten Alarmzentralen (AZ) und mindestens einer Meldestelle (MS) über ein Kommunikationsnetz, wobei die in einer abgeschlossenen Wohneinheit installierte Meldestelle eine ihr zugeordnete Notrufmeldeeinrichtung (10) und eine Nothilfekommunikationseinheit (14) aufweist und aufgrund einer Notrufmeldung (NRM) selbsttätig eine Verbindung zur Alarmzentrale (AZ) herstellt und hierbei durch vorherige gegenseitige Identifizierung sicherstellt, daß der Notruf und weitere Informationen nur an die empfangsberechtigte Alarmzentrale übertragen werden und wobei nach dem Eintreffen einer Notrufmeldung (NRM) in einer berechtigten Alarmzentrale (AZ) eine Wechselsprechverbindung zwischen der Alarmzentrale (AZ) und der Meldestelle (MS) hergestellt wird, die von der Alarmzentrale (AZ) aus gesteuert wird, gekennzeichnet durch folgende Verfahrensschritte :

a) von der Alarmzentrale (AZ) aus wird eine kontrollierte Türöffnungsprozedur eingeleitet, wobei zur Meldestelle (MS) ein codiertes Signal (TKF) zur Aktivierung eines Türöffnungsschaltkreises (TSK) übertragen und nach Beendigung des Sprechverkehrs die Verbindung getrennt wird ;

b) Nach Betätigung (TKB) eines Türklingelknopfes (6) der abgeschlossenen Wohneinheit wird vom aktivierten Türöffnungsschaltkreis (TSK) erneut eine Verbindung von der Meldestelle (MS) zur Alarmzentrale (AZ) hergestellt und dies dort angezeigt ;

c) Von der Alarmzentrale (AZ) aus wird mittels einer an der Tür der abgeschlossenen Wohneinheit angeordneten Türübertragungseinrichtung (17) eine Zugangsberechtigung einer zu Hilfe kommenden Person kontrolliert ;

d) Nach Berechtigungsfeststellung wird von der Alarmzentrale (AZ) aus das Öffnen der Tür (8) durch ein weiteres codiertes Signal (TO) veranlaßt und danach der Türöffnungsschaltkreis (TSK) abgeschaltet und nach Beendigung eines eventuell weiteren Sprechverkehrs die Verbindung getrennt ;

e) Mit einem Rücksetzungssignal (RS) wird von der Meldestelle (MS) eine letzte Verbindung zur Alarmzentrale (AZ) hergestellt und codierte Abschlußdaten übertragen, und die Nothilfekommunikations-Prozedur beendet.

2. Verfahren nach Anspruch 1, dadurch gekennzeichnet, daß nach einer Notrufmeldung (NRM) die Meldestelle (MS) ein vorzugsweise akustisches Quittungssignal (VA) aussendet, bis die Wechselsprechverbindung hergestellt ist.

3. Verfahren nach Anspruch 1, dadurch gekennzeichnet, daß nach Beendigung der Wechselsprechverbindung bis zum Eintreffen einer Hilfsperson die Meldestelle (MS) ein vorzugsweise akustisches Beruhigungssignal (BS), das sich vom Quittungssignal (VA) unterscheidet, aussendet, bis die Meldestelle (MS) in den Ruhezustand zurückgestellt (RS) wird.

4. Verfahren nach Anspruch 1, dadurch gekennzeichnet, daß von der Meldestelle (MS) aus die schon eingeleitete Nothilfekommunikations-Prozedur oder die Türöffnungsprozedur jederzeit unterbrochen werden kann, wobei die Meldestelle (MS) in den Ruhezustand zurückgestellt (RS) wird.

5. Verfahren nach Anspruch 1, dadurch gekennzeichnet, daß nach Umschalten der Meldestelle (MS) von einer aktiven auf eine passive Betriebsart (12) von der Alarmzentrale (AZ) aus die Verbindung zur Meldestelle (MS) hergestellt und die Nothilfekommunikationseinheit (14) angeschaltet wird, und daß ferner der Alarmzentrale (AZ) der momentane Zustand weiterer an die Meldestelle angeschlossener Gefahrenmelder (M1 ... M7) angezeigt wird.

6. Vorrichtung zur Durchführung des Verfahrens nach Anspruch 1, dadurch gekennzeichnet, daß die Meldestelle (MS) neben der Nothilfekommunikationseinheit (14), der eine Lautsprechereinheit (9) mit einer Notrufmeldungs-Schaltvorrichtung (10) für die Wechselsprechkommunikation zugeordnet ist, eine Leitungsankopplung (3), die an eine Fernsprechleitung (2) in Reihe zu dem privaten Fernsprechapparat (FAF) angeordnet ist, mindestens einen Kommunikationsprozessor (1), der an die Leitungsankopplung (3) und die Kommunikationseinheit (14) angeschlossen ist, eine Entschlüsselungsvorrichtung (15), die an den Kommunikationsprozessor (1) angeschlossen ist, und eine Ein-/Ausgabeeinheit (4) aufweist, die an die Entschlüsselungsvorrichtung (15) und den Kommunikationsprozessor (1) angeschlossen ist.

7. Vorrichtung zur Durchführung der Verfahrens nach Anspruch 1, dadurch gekennzeichnet, daß die Meldestelle (MS) einen Türöffnungsschaltkreis (TSK) aufweist, der von einer an die Entschlüsselungsvorrichtung (15) und die Ein-/Ausgabeeinheit (4) angeschlossenen Türsteuervorrichtung (7) mit einer Umschaltvorrichtung (7r), einem Türklingelknopf (6), einem Türöffner (8), einer Türübertragungseinrichtung (17) gebildet ist.

8. Vorrichtung nach Anspruch 7, dadurch gekennzeichnet, daß die Türübertragungseinrichtung (17) von einer neben der Tür angeordneten Wechselsprecheinrichtung gebildet ist, die an die Kommunikationseinheit (14) der Meldestelle anschaltbar ist.

9. Vorrichtung nach Anspruch 7, dadurch gekennzeichnet, daß die Türübertragungseinrichtung (17) von einem Funksender und einem in der Meldestelle (MS) angeordneten Funkempfänger gebildet ist.

10. Vorrichtung nach Anspruch 7, dadurch gekennzeichnet, daß die Türübertragungseinrichtung (17) von einer vorzugsweise codierten Schließvorrichtung gebildet ist.

11. Vorrichtung zur Durchführung des Verfahrens nach Anspruch 1, dadurch gekennzeichnet, daß zur Notrufmeldung die Meldestelle einen eingebauten Schalter, einen über elektrische Leitung anschließbaren Taster oder einen Infrarotempfänger aufweist, der von einem mobilen Infrarotsender ansteuerbar ist.

12. Vorrichtung nach Anspruch 11, dadurch gekennzeichnet, daß der Infrarotsender in einem am Handgelenk tragbaren Gehäuse untergebracht ist, an dem mindestens eine Leuchtdiode und ein Taster angeordnet sind.

13. Vorrichtung zur Durchführung des Verfahrens nach Anspruch 1, dadurch gekennzeichnet, daß die Meldestelle (MS) Anschlußeinrichtungen für weitere Lautsprechereinheiten aufweist, wobei in jeder Lautsprechereinheit eine Wechselsprecheinrichtung und ein Infrarotempfänger angeordnet sind.

14. Vorrichtung zur Durchführung des Verfahrens nach Anspruch 6, dadurch gekennzeichnet, daß die Meldestelle (MS) einen an die Fernsprechleitung (2) angeschlossenen Ruftondetektor (13) und eine von einer aktiven auf eine passive Betriebsart umschaltbare Umschalteinheit (11) mit einem Umschalter (12) aufweist, wobei der Ruftondetektor (13) mit dem Kommunikationsprozessor (1) und der Umschalteinheit (11) und die Umschalteinheit (11) mit der Kommunikationseinheit (14) und der Entschlüsselungsvorrichtung (15) verbunden sind.

15. Vorrichtung zur Durchführung des Verfahrens nach Anspruch 6, dadurch gekennzeichnet, daß die Meldestelle (MS) mindestens einen zusätzlichen Gefahrenmeldereingang (M1 ... M7) aufweist, der über eine Kopplungseinheit (5) an die Ein-/Ausgabeeinheit (4) angeschlossen ist.

16. Vorrichtung nach einem der vorhergehenden Ansprüche, dadurch gekennzeichnet, daß in der Zentrale eine Anzeigevorrichtung zur numerischen Anzeige der rufenden Meldestelle und weiterer Daten, ein Drucker zur Protokollierung und entsprechende Tasten zur Steuerung des Sprechverkehrs und der Türöffnungsprozedur vorgesehen sind.

17. Vorrichtung nach einem der vorhergehenden Ansprüche, dadurch gekennzeichnet, daß die Alarmzentrale Schnittstellen aufweist zum Anschluß an eine Datenverarbeitungsanlage und zum Anschluß eines Tonaufzeichnungsgerätes.

## Claims

1. A method of reporting emergencies and for the initiation of emergency measures by means of secured, encoded data transmission via a communication network between one or more alarm centres (AZ) entitled to receive calls and at least one alarm station (MS), wherein an alarm station which is installed in a self-contained dwelling unit comprises an emergency alarm device (10) assigned thereto and an emergency communication unit (14), and on the basis of an emergency alarm (NRM) automatically establishes a connection to an alarm centre (AZ) and thus, by means of preceding mutual identification, ensures that the emergency and other items of information are transmitted only to the alarm centre entitled to receive the call, and following the arrival of an emergency alarm (NRM) at an authorised alarm centre (AZ) a two-way speech connection is established between the alarm centre (AZ) and the alarm station (MS) which is controlled from the alarm centre (AZ), characterised by the following process steps :

a) the alarm centre (AZ) initiates a monitored door opening procedure wherein the alarm station (MS) is supplied with a coded signal (TKF) which serves to activate a door opening circuit (TSK) and at the end of the speech communication the connection is broken ;

b) following the actuation (TKB) of a door bell button (6) at the self-contained dwelling unit, the activated door opening circuit (TSK) re-establishes a connection from the alarm station (MS) to the alarm centre (AZ) and indicates this connection at the alarm centre ;

c) by means of a door transmission device (17) arranged on the door of the self-contained dwelling unit the alarm centre (AZ) monitors the entitlement to access of an individual who has arrived to provide assistance ;

d) following the establishment of entitlement the alarm centre (AZ) causes the door (8) to open by means of a further coded signal (TO) whereupon the door opening circuit (TSK) is dis-connected and at the end of any further speech communication which may take place the connection is broken ; and

e) by means of a reset signal (RS) the alarm station (MS) establishes a last connection to the alarm centre (AZ) and coded terminating data is transmitted and the emergency communication procedure is ended.

2. A method as claimed in Claim 1, characterised in that following an emergency call (NRM) the alarm station (MS) transmits a preferably acoustic acknowledgement signal (VA) until the two-way speech connection is established.

3. A method as claimed in Claim 1, characterised in that on the termination of the two-way speech connection prior to the arrival of an assistant the alarm station (MS) transmits a preferably acoustic muting signal (BS) which differs from the acknowledgement signal (VA) until the alarm station (MS) is reset to the rest state (RS).

4. A method as claimed in Claim 1, characterised in that the alarm station (MS) can at any time interrupt an already initiated emergency communication procedure or the door opening procedure in which case the alarm station (MS) is reset to the rest state (RS).

5. A method as claimed in Claim 1, characterised in that following the switch-over of the alarm station (MS) from an active to a passive operating mode (12) the alarm centre (AZ) establishes the connection to the alarm station (MS) and connects the emergency communication unit (14), and that moreover the instantaneous state of other danger warning systems (M1 ... M7) connected to the alarm station is indicated to the alarm centre (AZ).

6. A device for carrying out the method claimed in Claim 1, characterised in that in addition to the emergency communication unit (14) which is assigned a loud speaker unit (9) featuring an emergency call switching device (10) for the two-way speech communication, the alarm station (MS) also comprises a line coupling unit (3) which is arranged on a telephone line (2) in series with the private telephone device (FAF), at least one communication processor (1) which is connected to the line coupling unit (3) and to the communication unit (14), a decoding device (15) which is connected to the communication processor (1) and an input/output unit (4) which is connected to the decoding device (15) and to the communication processor (1).

7. A device for carrying out the method claimed in Claim 1, characterised in that the alarm station (MS) comprises a door opening circuit (TSK) which is formed by a door control device (7) connected to the decoding device (15) and to the input/output unit (4), comprising a switch-over device (7r), a door bell button (6), a door opener (8), and door transmission device (17).

8. A device as claimed in Claim 7, characterised in that the door transmission device (17) is formed by a two-way speech device arranged beside the door, which can be connected to the communication unit (14) of the alarm station.

9. A device as claimed in Claim 7, characterised in that the door transmission device (17) is formed by a radio transmitter and a radio receiver arranged in the alarm station (MS).

10. A device as claimed in Claim 7, characterised in that the door transmission device (17) is formed by a preferably coded closing device.

11. A device for carrying ou the method claimed in Claim 1, characterised in that in oder that the emergency alarm may be given the alarm station comprises a built-in switch, a sensor which can be connected via an electric line, or an infra-red receiver which can be controlled by a mobile infra-red transmitter.

12. A device as claimed in Claim 11, characterised in that the infra-red transmitter is accommodated in a housing which can be carried on the wrist and on which are arranged at least one luminescent diode and one sensor.

13. A device for carrying out the method claimed in Claim 1, characterised in that the alarm station (MS) comprises connection devices for other loud-speaker units where a two-way speech and a infra-red receiver are provided in each loud-speaker unit.

14. A device for carrying out the method claimed in Claim 6, characterised in that the alarm station (MS) comprises a ringing tone detector (13) connected to the telephone line and a switch-over unit (11) which can be switched over from an active to a passive operating mode and which is provided with a change-over switch (12), where the ringing tone detector (13) is connected to the communication processor (1) and to the switch-over unit (11), and the switch-over unit (11) is connected to the communication unit (14) and the decoding device (15).

15. A device for carrying out the method claimed in Claim 6, characterized in that the alarm station (MS) comprises at least one additional danger warning input (M1 ... M7) which is connected via a coupling unit (5) to the input/output unit (4).

16. A device as claimed in one of the preceding claims, characterised in that the centre contains a display device for the numerical display of the calling alarm station and of other items of data, a printer for logging, and appropriate push buttons for controlling the speech traffic and the store opening procedure.

17. A device as claimed in one of the preceding claims, characterised in that the alarm centre comprises interfaces for connection to a data processing system and for the connection of a sound recording device.


**Revendications**


1. Procédé pour signaler des appels de secours et démarrer des mesures de premiers secours au moyen d'une transmission de données codées protégées entre un ou plusieurs centraux d'alarme (AZ) autorisés en réception et au moins un poste avertisseur (MS) par l'intermédiaire d'un réseau de communications, le poste avertisseur installé dans une habitation fermée à clef comportant un avertisseur d'appel de secours (10) qui lui est associé et une unité de communication de premiers secours (14), et établissant automatiquement une liaison avec le central d'alarme (AZ) sur la base d'un avis d'appel de secours (NRM) et assurant en même temps, par identification mutuelle antérieure, que l'appel de secours et d'autres informations ne sont transmis qu'au signal d'alarme autorisé en réception, et une liaison d'intercommunication, qui est commandée à partir du central d'alarme (AZ), étant établie entre le central d'alarme (AZ) et le poste avertisseur (MS), après l'arrivée d'un avis d'appel de secours (NRM) dans un central d'alarme autorisé (AZ), caractérisé par les phases opératoires suivantes :

a) à partir du central d'alarme (AZ) est démarrée une procédure d'ouverture de la porte, à l'occasion de quoi un signal codé (TKF) pour l'activation d'un circuit d'ouverture de porte (TSK) est transmis au poste avertisseur (MS) et la liaison est coupée à la fin de l'intercommunication téléphonique ;

b) après actionnement (TKB) d'un bouton de sonnette de porte (6) de l'habitation fermée à clef, une liaison est rétablie, par le circuit d'ouverture de porte (TSK) activé, entre le poste avertisseur (MS) et le central d'alarme (AZ) et est indiquée dans celui-ci ;

c) une autorisation d'accès pour une personne venant en aide est contrôlée à partir du central d'alarme (AZ), au moyen d'un dispositif de transmission de porte (17) disposé sur la porte de l'habitation fermée à clef ;

d) après détermination de l'autorisation, à partir du central d'alarme (AZ) l'ouverture de la porte (8) est provoquée par un autre signal codé (TO) puis le circuit d'ouverture de porte (TSK) est débranché et à la fin d'une autre intercommunication téléphonique éventuelle la liaison est coupée ;

e) à partir du poste avertisseur (MS), une dernière liaison en direction du central d'alarme (AZ) est établie, des données de fermeture codées sont transmises et la procédure de communication de premiers secours est terminée, au moyen d'un signal de remise dans l'état initial (RS).

2. Procédé suivant la revendication 1, caractérisé en ce qu'après un avis d'appel de secours (NRM), le poste avertisseur (MS) émet un signal d'accusé de réception (VA) de préférence acoustique, jusqu'à ce que la liaison d'intercommunication soit établie.

3. Procédé suivant la revendication 1, caractérisé en ce qu'après la fin de la liaison d'intercommunication jusqu'à l'entrée d'une personne venant en aide, le poste avertisseur (MS) émet un signal d'apaisement (BS), de préférence acoustique, qui se différencie du signal d'accusé de réception (VA), jusqu'à ce que le poste avertisseur (MS) soit remis (RS) dans l'état de repos.

4. Procédé suivant la revendication 1, caractérisé en ce que la procédure de communication de premiers secours déjà démarrée ou la procédure d'ouverture de la porte peut être interrompue à tout moment à partir du poste avertisseur (MS), le poste avertisseur (MS) étant remis dans l'état de repos (RS).

5. Procédé suivant la revendication 1, caractérisé en ce qu'après la commutation du poste avertisseur (MS) d'un mode de fonctionnement actif sur un mode de fonctionnement passif (12), la liaison avec le poste avertisseur (MS) est établie et l'unité de communication de premiers secours (14) est branchée à partir du central d'alarme (AZ) et qu'en outre dans le central d'alarme (AZ) est affiché l'état momentané d'autres avertisseurs de danger (M1 ... M7) raccordés au poste avertisseur.

6. Dispositif pour la mise en œuvre du procédé suivant la revendication 1, caractérisé en ce que le poste avertisseur (MS) comporte, outre l'unité de communication de premiers secours (14), qui est associée à un dispositif de haut-parleur (9) comportant un dispositif de commutation d'avis d'appel de secours (10) pour la communication téléphonique alternée, un couplage de ligne (3) qui est disposé sur une ligne téléphonique (2) en série avec l'appareil téléphonique privé (FAP), au moins un processeur de communications (1), qui est relié au couplage de ligne (3) et à l'unité de communication (14), un dispositif de décodage (15) qui est relié au processeur de communication (1), et une unité d'entrée/sortie (4) qui est reliée au dispositif de décodage (15) et au processeur de communication (1).

7. Dispositif pour la mise en œuvre du procédé suivant la revendication 1, caractérisé en ce que le poste avertisseur (MS) comporte un circuit d'ouverture de porte (TSK) qui est constitué par un dispositif de commande de porte (7), relié au dispositif de décodage (15) et à l'unité d'entrée/sortie (4), comprenant un dispositif de commutation (7r), par un bouton de sonnette de porte (6), par un dispositif d'ouverture de porte (8), et par un dispositif de transmission de porte (17).

8. Dispositif suivant la revendication 7, caractérisé en ce que le dispositif de transmission de porte (17) est formé par un dispositif d'intercommunication disposé à côté de la porte et qui peut être relié à l'unité de communication (14) du poste avertisseur.

9. Dispositif suivant la revendication 7, caractérisé en ce que le dispositif de transmission de porte (17) est formé par un radio-émetteur et un radio-récepteur disposés dans le poste avertisseur (MS).

10. Dispositif suivant la revendication 7, caractérisé en ce que le dispositif de transmission de porte (17) est formé par un dispositif de fermeture de préférence coudé.

11. Dispositif pour la mise en œuvre du procédé suivant la revendication 1, caractérisé en ce que pour signaler des appels de secours le poste avertisseur comporte un commutateur incorporé, une touche pouvant être mise en circuit par l'intermédiaire d'une ligne électrique ou un récepteur d'infrarouges qui peut être commandée par un émetteur d'infrarouges mobile.

12. Dispositif suivant la revendication 11, caractérisé en ce que l'émetteur d'infrarouges est logé dans un boîtier pouvant être porté au poignet et sur lequel sont disposées au moins une diode photosensible et une touche.

13. Dispositif pour la mise en œuvre du procédé suivant la revendication 1, caractérisé en ce que le poste avertisseur (MS) comporte des dispositifs de raccordement pour d'autres unités de haut-parleur, un dispositif d'intercommunication et un récepteur d'infrarouges étant disposés dans chaque unité de haut-parleur.

14. Dispositif pour la mise en œuvre du procédé suivant la revendication 6, caractérisé par le fait que le poste avertisseur (MS) comporte un détecteur de tonalité d'appel (13), raccordé à la ligne téléphonique (2) et une unité de commutation (11), pouvant être commutée d'un mode de fonctionnement actif sur un mode de fonctionnement passif, comportant un commutateur (12), le détecteur de tonalité d'appel (13) étant relié au processeur de communication (1) et à l'unité de commutation (11), et l'unité de commutation (11) étant reliée à l'unité de communication (14) et au dispositif de décodage (15).

15. Dispositif pour la mise en œuvre du procédé selon la revendication 6, caractérisé en ce que le poste avertisseur (MS) comporte au moins une entrée supplémentaire d'avertisseur de danger (M1 ... M7) qui est raccordée, par l'intermédiaire d'une unité de couplage (5), à l'unité d'entrée/sortie (4).

16. Dispositif suivant l'une des revendications précédentes, caractérisé en ce que dans le central sont prévus un dispositif d'affichage pour l'affichage numérique des postes avertisseurs qui appellent et d'autres données, une imprimante pour l'impression et des touches correspondantes pour la commande de l'intercommunication téléphonique et de la procédure d'ouverture de porte.

17. Dispositif suivant l'une des revendications précédentes, caractérisé en ce que le central d'alarme comporte des points d'intersection pour le raccordement à une installation de traitement de données et pour le raccordement d'un enregistreur de son.

FIG 1

FIG 2

FIG 3

FIG 4

0 021 425